# EUROPÄISCHE PATENTSCHRIFT

(11) **EP 2 964 132 B1**
(45) Veröffentlichungstag und Bekanntmachung des Hinweises auf die Patenterteilung: **11.10.2017**
(21) Anmeldenummer: 14707830.7
(22) Anmeldetag: 05.03.2014
(51) Int. Cl.: A61C 7/08, A61C 9/00, A61C 13/34, G09B 23/28

(54) **VERFAHREN ZUR HERSTELLUNG EINES KIEFERORTHOPÄDISCHEN SETUPS**
METHOD FOR PRODUCING AN ORTHODONTIC SETUP
PROCÉDÉ D'ÉTABLISSEMENT D'UNE CONFIGURATION D'ORTHODONTIE

(30) Priorität: 05.03.2013 DE 102013102163
(43) Veröffentlichungstag der Anmeldung: 13.01.2016
(73) Patentinhaber: Ortho Caps GmbH, 59069 Hamm (DE)
(72) Erfinder: KHAN, Wajeeh, 59069 Hamm (DE)
(74) Vertreter: Michalski Hüttermann & Partner Patentanwälte mbB
(86) Internationale Anmeldenummer: PCT/EP2014/054285
(87) Internationale Veröffentlichungsnummer: WO 2014/135599

(56) Entgegenhaltungen:
- EP-A1- 2 384 717
- US-A1- 2005 048 433
- US-A1- 2012 061 868

## Beschreibung

Aligner sind patientenangepasste kieferorthopädische Vorrichtungen, die gewöhnlich aus einem durchsichtigem Kunststoff bestehen, und alternativ zur traditionellen Metallzahnspange für die Ausrichtung und Begradigung von Zähnen benutzt werden. Wie Zahnspangen helfen sie, die Zahnstellungen einer Person in Bezug auf deren Biss auszugleichen und dadurch kieferorthopädische Fehlstellungen, wie Zahnfehlstellungen/ Fehlokklusionen, zu beseitigen.

Herkömmliche Verfahren zur Herstellung von Alignern basieren auf dem Tiefziehen geeigneter Folien über einem sogenannten kieferorthopädischen Setup. Letzteres besteht in der Regel aus einem Gipsmodell oder einem mittels 3D-Drucken hergestellten Modell, das den Istzustand, dem klinisch bzw. ästhetisch zu erreichenden Sollzustand oder einen Übergangsstadium des gesamten Ober- oder Unterkiefers bestehend aus Alveolarkamm nebst Zähnen darstellt.

Weiter entwickelte Verfahren verwenden das sogenannte Computer Aided Design, um am Rechner den Verlauf der Positionskorrektur vorwegzunehmen und inkrementelle Setups herzustellen, an welchen dann inkrementelle Aligner hergestellt werden können Im Zusammenhang mit dem Stand der Technik werden die Dokumente US 2005/048433 A1 und US 2012/061868 A1 genannt. Die beschriebenen Verfahren sind also - ebenso wie Verfahren, bei denen durch händisches Modellieren an einem Gipsmodell Setups hergestellt werden - der Subjektivität eines Behandlers oder Technikers ausgesetzt.

Es ist die Aufgabe der vorliegenden Erfindung, eine Alternative zu den aus dem Stand der Technik bekannten Verfahren bereitzustellen.

Es ist eine weitere Aufgabe der vorliegenden Erfindung, eine Alternative zu den aus dem Stand der Technik bekannten Verfahren bereitzustellen, die nicht der Subjektivität eines Behandlers oder Technikers ausgesetzt sind.

Diese Aufgaben werden mit der vorliegenden Erfindung gelöst.

### Zusammenfassung der Erfindung

Es soll angemerkt werden, dass in der verwendeten Beschreibung und in den anhängenden Ansprüchen die einfache Form wie "ein/eine" oder "der/die/das" einen singulären und/oder pluralen Gegenstand beinhaltet, außer wenn es im Kontext klar anders formuliert ist. Außerdem ist zu vereinbaren, dass für den Fall, dass ein Parameterbereich angegeben wurde, die begrenzenden Zahlenwerte als Grenzwerte zum Zahlenbereich dazu gelten. Der Begriff "Aligner" wie her verwendet, wird synonym mit den Begriffen "Retainer", "Positioner" und "Splint" verwendet. Zwar wird in der Literatur zuweilen zwischen Alignern und Retainern unterschieden, dergestalt, dass Aligner eine aktive Änderung der Zahnstellung herbeiführen sollen, während Retainer lediglich eine auf anderem Wege herbeigeführte Änderung der Zahnstellung fixieren oder etablieren sollen, allerdings wird diese Unterscheidung in der Literatur nicht konsequent durchgesetzt. Letztlich macht es auch keinen Unterschied, ob eine Kunststoffschiene Kräfte in einen Zahn einleitet, um seine Position aktiv zu ändern oder nur zu fixieren.

Erfindungsgemäß ist ein Verfahren zur Herstellung mindestens eines kieferorthopädischen Setups vorgesehen, aufweisend
a) das Platzieren von Zahnmodellen in einem Modell eines Kieferbogens oder eines Abschnitts desselben aufweisend ein Einbettungsmaterial dergestalt, dass der Ist-Zustand einer Zahnkonfiguration eines Patienten reproduziert wird, um ein Modell der Zahnkonfiguration ("typodont") zu erhalten,
b) Anbringen eines Zugelements mittelbar oder unmittelbar an mindestens zwei Zahnmodellen dergestalt, dass ein Zug oder Druck auf die Zahnmodelle ausgeübt wird, oder
   Anbringen mindestens eines Zugelements mittelbar oder unmittelbar an mindestens einem Zahnmodell dergestalt, dass ein Zug oder Druck auf das Zahnmodell ausgeübt wird,
c) Simulieren einer kieferorthopädischen Korrekturbewegung in dem Modell der Zahnkonfiguration ("typodont) aufgrund des ausgeübten Zugs oder Drucks durch
   (i) Erniedrigung der Viskosität des Einbettungsmaterials oder Teilen desselben
   (ii) mindestens partielles Entfernen des Einbettungsmaterials
d) Aufnahme mindestens zweier Übergangsstadien ("Frames") der simulierten kieferorthopädischen Korrekturbewegung in dem Modell der Zahnkonfiguration ("typodont") mit Hilfe eines bildgebenden Verfahrens oder eines tracking-Verfahrens
e) Gewinnung von digitalen Daten, die mittelbar oder unmittelbar die Positionen mindestens eines Zahnmodells in dem Modell der Zahnkonfiguration in Bezug auf mindestens zwei aufgenommene Übergangsstadien beschreiben, und
f) Herstellung mindestens eines kieferorthopädischen Setups eines Übergangsstadiums, wobei besagtes Setup mittelbar oder unmittelbar auf einem Modell basiert, das auf Basis der dergestalt gewonnenen digitalen Daten mittels einer CAM-Technik hergestellt wurde.

Bevorzugt ist dabei vorgesehen, dass das Zugelement mithilfe von Brackets an den Zahnmodellen angebracht wird (Mittelbare Befestigung). Hierzu müssen zuvor mindestens zwei Brackets auf der Oberfläche mindestens zweier Zahnmodelle angebracht werden.

Ebenso kann das Zugelement aber auch unmittelbar auf der Oberfläche mindestens zweier Zahnmodelle befestigt werden, beispielsweise mithilfe eines geeigneten Klebers (bevorzugt lichthärtend) oder Zements (unmittelbare Befestigung).

Alternativ und weiterhin bevorzugt ist in Schritt b) die Anbringung mindestens eines, bevorzugt zwei, Zugelemente mittelbar oder unmittelbar an einem Zahnmodell, dergestalt, dass ein Zug oder Druck auf das Zahnmodell ausgeübt wird.

In dieser Ausführungsform kann erfindungsgemäß auf die Verwendung von Brackets verzichtet werden, da die Funktion und Wirkungsweise der Brackets durch die Ausnehmung übernommen wird. So kann in einem einzigen Zahnmodell mindestens eine erste Ausnehmung, eingebracht werden, dergestaltet dass ein erstes Zugelement anbringbar ist.

Der Begriff "Ausnehmung" stellt im Rahmen der vorliegenden Erfindung eine Kontaktfläche für das Zugelement dar, um über diese Kontaktfläche einen Zug oder Druck auf das Zahnmodell auszuüben, dabei bestimmt die Lage/Ausrichtung der Ausnehmung die Lage und Ausrichtung des Zugelements. Im weitesten Sinne stellt die Ausnehmung eine Achse (Y, Z, X-Achse) des jeweiligen Zahnmodells dar. Dabei ist die Ausnehmung bevorzugt eine teilweise oder durchgängige Ausnehmung, wie ein Kanal oder Einstülpungen (unmittelbare Befestigung). Je nach Ist-Zustand des Zahnmodells kann die Erreichung eines Soll-Zustands mit nur einer Ausnehmung und einem Zugelement erfolgen. Bevorzugt werden jedoch zwei Ausnehmungen mit je einem Zugelement in einem Zahnmodell platziert. Dies ermöglicht eine präzisere Ausrichtung des Zahnmodells entlang der drei Achsen.

Im Sinne der vorliegenden Erfindung versteht der Fachmann unter einer Ausnehmung nicht zwingend einen hohlen Raum, wie ein Kanal. Beispielsweise kann eine Ausnehmung eines Zahnmodells auch eine Ausstülpung darstellen, an das Zugelement anschließbar ist, wie dies von Schläuchen bekannt ist. Oder das Zahnmodell wird aus zwei Komponenten gefertigt, eins stellt den Zahn und die andere Komponente stellt zumindest teilweise ein Zugelement dar (mittelbare Befestigung). Dieses kann nachdem das Zahnmodell in das Kieferbogenmodell eingesetzt wird, an einem weiteren Fixpunkt befestigt werden, der an den Soll-Zustand des jeweiligen Zahnmodells angepasst ist. Dies könnte ein weiterer Rahmen sein, der um das Kieferbogenmodell positioniert ist oder das Kieferbogenmodell selbst. Auch können mehrere Rahmen verwendet werden.

Mit dem Begriff "Ist-Zustand" ist im Folgenden der klinische Ausgangzustand gemeint, d.h. jener Zustand der Zahnkonfiguration, der korrigiert werden soll.

Mit dem Begriff "Übergangsstadium" ist im Folgenden ein sich während der simulierten Korrekturbewegung einstellender zeitlich limitierter Zustand gemeint, der jedoch dem klinisch bzw. ästhetisch zu erreichenden Sollzustand näher liegt.

Die obige Auflistung der Verfahrensschritte darf nicht zwingend chronologisch verstanden werden. Beispielsweise können die Brackets auch vor dem Platzieren der Zähne in dem Einbettungsmaterial auf den Oberflächen der Zahnmodelle angebracht werden.

Im vorliegenden Zusammenhang bezieht sich der Ausdruck CAM auf das sogenannte Computer Aided Manufacturing, bei welchem ein Computer eine Fertigungsmaschine steuert. CAM-Verfahren umfassen das sogenannte Rapid Prototyping, wie 3D-Plotting, 3D-Photolithographie oder CNC-Fräsen. CAM-Techniken werden in aller Regel mit CAD-Techniken kombiniert (sogenanntes CAD/CAM).

Das Platzieren von Zahnmodellen in dem Modell des Kieferbogens erfolgt vorzugsweise mit einer Schablone. Hierzu kann beispielsweise vorgesehen sein, vom Ist-Zustand der Zahnstellung ein Negativ-Modell zu erzeugen (beispielsweise durch einen Abdruck in einer geeigneten Alginatmasse), und mithilfe dieses Negativmodells dann die Zahnmodelle in dem Modell des Kieferbogens zu platzieren. Hierzu können beispielsweise die Zahnmodelle passend in das als Schablone fungierende Negativ-Modell gesteckt werden.

Die Schablone kann auch nach einscannen des besagten Abdrucks (Negativ-Modell) oder eines daran angefertigten Abgusses (Positiv-Modell, beispielsweise in Gips) erzeugt werden, nämlich indem mithilfe einer CAD-Software von besagtem Abdruck oder Abguss ein CAD-Modell erzeugt wird (entweder ein Positiv- oder ein Negativ-Modell), und anschließend - ggf. nach Invertieren des Positiv-CAD-Modells in ein Negativ-CAD-Modell und etwaiger weiterer Bearbeitung des CAD-Modells - mit Hilfe von CAM-Techniken ein Negativ-Modell erzeugt wird, mithilfe dessen die Zahnmodelle in dem Modell des Kieferbogens platziert werden. Hierzu können beispielsweise die Zahnmodelle passend in das als Schablone fungierende Negativ-Modell gesteckt werden.

Mit dem Begriff "Modell des Kieferbogens" kann einerseits ein voll ausgebildetes, anatomisch exaktes Modell des Kieferbogens gemeint sein. Ebenso erfasst ist jedoch ein ggf. hufeisenförmiges Modell oder gar ein flächiges Modell, in welchem die Zahnmodelle platziert werden können.

Mit dem Begriff "Ist-Zustand" ist im Folgenden der klinische Ausgangzustand gemeint, d.h. jener Zustand der Zahnkonfiguration, der korrigiert werden soll.

Unter dem Begriff "Einbettungsmaterial" ist ein Material zu erstehen, in welches die besagten Zahnmodelle eingebettet sind, wobei zunächst der Ist-Zustand der betreffenden Zahnkonfiguration reproduziert wird.

Der Begriff "kieferorthopädisches Setup" bezeichnet ein physisches oder virtuelles Modell eines Ober- und/oder Unterkiefers aufweisend die Zähne sowie den Alveolarkamm, bzw. eines Abschnitts desselben. Dabei kann das Setup sowohl den Ist-Zustand eines Patienten als auch einen Anfangs-, Übergangs- oder End-Korrekturzustand (klinisch oder ästhetisch zu erreichender Sollzustand) einer geplanten oder durchgeführten kieferorthopädischen Therapie darstellen.

Kieferorthopädische Setups werden beispielsweise für das Herstellen von Alignern benötigt, können aber auch für die Herstellung oder Modellage von herkömmlichen Zahnspangen oder Brackets verwendet werden, oder für die Diagnostik, beispielsweise um die Machbarkeit/Durchführbarkeit einer Behandlung zu überprüfen.

Das besagte kieferorthopädische Setup kann mittelbar auf einem Modell basieren, das auf Basis der dergestalt gewonnenen digitalen Daten mittels einer CAM-Technik hergestellt wurde. Hierzu wird beispielswiese mittels CAM eine Lochplatte oder ein Alveolarkamm ohne Zahnmodelle hergestellt, dessen Kavitäten in Ihrer Ausrichtung die Position der Zähne in besagtem Übergangsstadium in allen Freiheitsgraden definieren. Durch Anordnung der Zahnmodelle in den Kavitäten wird anschließend ein kieferorthopädisches Setup hergestellt.

Das besagte Setup kann jedoch auch unmittelbar auf einem Modell basieren, das auf Basis der dergestalt gewonnenen digitalen Daten mittels einer CAM-Technik hergestellt wurde Hierzu wird mittels CAM direkt ein kieferorthopädisches Setup hergestellt, beispielsweise eine Lochplatte inkl. Zähne oder ein Alveolarkamm inkl. Zähne hergestellt.

Der Begriff "Alveolarkamm" bezeichnet ein mehr oder minder anatomisch korrektes physisches Modell eines Ober- und/oder Unterkiefers aufweisend, oder eines Abschnitts desselben, abzüglich der Zähne. Stattdessen weist der Alveolarkamm Kavitäten auf, die in etwa den Zahnfächern ("Sockets") entsprechen. Dabei kann das Setup sowohl den Ist-Zustand eines Patienten als auch einen Anfangs-, Übergangs- oder End-Korrekturzustand einer geplanten oder durchgeführten kieferorthopädischen Therapie darstellen.

Bevorzugt ist dabei vorgesehen, dass mindestens eine Kavität in besagtem Alveolarkamm-Modell in ihrer Form und/oder Ausrichtung so ausgestaltet ist, dass sie die Orientierung des betreffenden Zahnmodells in allen sechs Freiheitsgraden bestimmt.

Gemäß dieser Ausführungsform ist also vorgesehen, dass die Form der Kavität dergestalt mit der Form der Wurzel des betreffenden Zahnmodells interagiert, dass sie dessen Orientierung bestimmt. Hierfür ist vorgesehen, dass Kavität und Wurzel des betreffenden Zahnmodells mindestens abschnittsweise formschlüssig miteinander ausgestaltet sind.

Eine Manipulation der Form bzw. Ausrichtung der Kavität bestimmt damit automatisch die die Orientierung des betreffenden Zahnmodells. Auf diese Weise ist einem Therapeuten ein Werkzeug in die Hand gegeben, die Orientierung mehrerer Zahnmodelle in einem kieferorthopädischen Setup zu bestimmen und so einen Aligner herzustellen, der eine vorher bestimmte Korrektur der Zahnstellung bewirken kann.

Mit Freiheitsgrad wird die Zahl der frei wählbaren, voneinander unabhängigen Bewegungsmöglichkeiten eines Systems bezeichnet. Ein starrer Körper im Raum hat demnach den Freiheitsgrad, denn man kann den Körper in drei voneinander unabhängige Richtungen bewegen und in drei voneinander unabhängigen Ebenen drehen. In dieser Bedeutung als Gesamtzahl der unabhängigen Bewegungsmöglichkeiten kommt der Begriff Freiheitsgrad nur im Singular vor. Die einzelnen Bewegungsmöglichkeiten werden dann auch Freiheiten genannt. In der Literatur und im allgemeinen Sprachgebrauch wird aber auch jede der unabhängigen Bewegungsmöglichkeiten eines Systems als ein Freiheitsgrad bezeichnet. Ein starrer Körper ohne Bindungen hat demnach sechs Freiheitsgrade.

Der Begriff "Lochplatte" bezeichnet ein stärker abstrahiertes Modell eines Alveolarkamm, das nicht den versucht macht, den Unter- oder Oberkiefer anatomisch nachzubilden. Gleichwohl sind in einer Lochplatte Kavitäten vorgesehen, die in ihrer Form und/oder Ausrichtung so ausgestaltet ist, dass sie die Orientierung des betreffenden Zahnmodells in allen sechs Freiheitsgraden bestimmen.

Der Begriff "Bracket" ist im vorliegenden Kontext sehr breit zu verstehen und bezeichnet eine Vorrichtung, die auf einem Zahn oder Zahnmodell angebracht (i.d.R. geklebt) wird und eine Aufnahme für ein Zugelement, beispielsweise einen Bogendraht ("Archwire"), eine Feder oder einen Federdraht, einen Gummizug oder ähnliches aufweist, und auf diese Weise in der Lage ist, zwecks Einleitung von korrigierenden Kräften einen Zug oder Druck auf die Zähne auszuüben. Im Sinne der Erfindung sind von diesem Begriff sowohl die herkömmlichen kieferorthopädischen Brackets aus Metall umfasst als auch alle anderen Vorrichtungen, die in der Lage sind, das besagte Zugelement an einem Zahn oder Zahnmodell anzubringend dergestalt, dass dieses die besagten Kräfte einleiten kann. Demnach stellen auch auf den Zahn oder das Zahnmodell aufgeklebte, mit einer Aufnahme für das Zugelement versehene Gebilde jedweder Form aus Keramik, Zement, Kunstharz etc. ein Bracket im Sinne der Erfindung dar.

Klassische Brackets wurden zu Beginn des letzten Jahrhunderts eingeführt, beispielsweise als sogenannte Ribbon-Arch-Appliance, die die dreidimensionale Regulierung von Zähnen ermöglichte. Damit bildete diese Apparatur den Ausgangspunkt für alle anderen Bracket-Entwicklungen. Ein weiterer wichtiger Zwischenschritt ist sogenannte Edgewise-Apparatur. Mit dieser kann die Zahnbewegung durch eine Veränderung der Bogendimension und der Angulationskontrolle wesentlich verbessert werden.

Dies war auch der Ausgangspunkt der Entwicklung weiterer Brackets mit verschiedensten Formen, Größen, Slot-Dimensionen, Slot-Anzahlen, Slot Winkel Bracket-Basis-Konturen und Verschlussmechanismen gesetzt. All dies sind Parameter, mit denen die herzustellende Korrektionsapparatur bestehen aus Brackets und einem oder mehreren Zugelementen gleichsam auf eine bestimmte, durchzuführende Korrekturbewegung programmiert werden kann.

Das Grundprinzip der Bracket-Therapie besteht darin, dass an jedem zu bewegenden Zahn ein Bracket angebracht wird, wobei besagte Brackets einen Kanal oder eine Aufnahme zur Ein- oder Durchführung eines Zugelements aufweist, dergestalt, dass ein Zug oder Druck auf die Zähne ausgeübt wird. Bei einem solchen Zugelement handelt es sich bevorzugt um einen Bogendraht ("Archwire"), oder aber um eine Feder oder einen Federdraht, einen Gummizug oder ähnliches. Das Zugelement wird an jedem Bracket befestigt und dabei notwendigerweise deformiert. Die Rückstellungskräfte des Zugelements üben nun eine Kraft auf die Zähne aus, die dazu führt, dass das Gewebe im Parodontalspalt stellenweise gestaucht (Druckzone) und an den jeweils gegenüberliegenden Stellen gestreckt (Zugzone) wird. Dies regt Umbauvorgänge an, bei denen Osteoklasten in der Druckzone Knochen ab- und Osteoblasten in der Zugzone Knochen anbauen. Dabei stellen sich sogenannte "sliding mechanics" ein, die dafür sorgen, dass die einzelnen Zähne aneinander vorbei in eine mehr oder minder ebenmäßige Konfiguration "gleiten", die beispielsweise von der Bogenform des Bogendrahts diktiert wird.

Das erfindungsgemäße Verfahren macht sich genau diese seit Jahrzehnten bewährte Technik zunutze. Unter Ausnutzung des "sliding mechanism" werden die bei einer Bracket-Therapie auftretenden Phänomene sozusagen im Zeitraffer simuliert, und einzelne Stadien des Therapieverlaufs im Bild (oder lediglich als Koordinaten) festgehalten, um letztlich als Grundlage für die Herstellung von weiter unten noch näher diskutierten Korrektureinrichtungen zu dienen.

Dabei wird mittels der besagten Brackets und Zugelemente ein Zug oder Druck aufgebaut, der dann durch
(i) Erniedrigung der Viskosität des Einbettungsmaterials oder Teilen desselben, oder
(ii) mindestens partielles Entfernen des Einbettungsmaterials
   abgebaut werden kann - wobei die Korrekturbewegung modellhaft und beschleunigt abläuft.

Erfindungsgemäß kann auch mittels der besagten Ausnehmung und des Zugelements ein Zug oder Druck aufgebaut werden, der dann durch
(i) Erniedrigung der Viskosität des Einbettungsmaterials oder Teilen desselben, oder
(ii) mindestens partielles Entfernen des Einbettungsmaterials
   abgebaut werden kann - wobei die Korrekturbewegung modellhaft und beschleunigt abläuft.

Hierbei bestimmt die Lage bzw. Ausrichtung der Ausnehmung(en), wie bei den Brackets, die Richtung in welche die Zugkräfte wirken, mit dem Unterschied dass das eine oder die zwei Zugelement(e) jeweils nur auf ein Zahnmodell direkt wirken. Durch das Einführen des Zugelements in die Ausnehmung eines Zahnmodells wird das jeweilige Zugelement notwendigerweise deformiert. Die Rückstellungskräfte des Zugelements üben so eine Kraft auf die Zähne aus, wie vorstehend beschrieben. Da alle zu korrigierenden Zahnmodelle jeweils mit diesen Ausnehmungen, d.h. Kanälen ausgestaltet sind und sich durch die Rückstellkräfte der Zugelemente in eine Lage entsprechend der Ausrichtung der Ausnehmungen sowie der benachbarten Zahnmodelle orientieren, ergibt sich ein Endzustand in dem die Zahnmodelle ihren jeweiligen Soll-Stellungen sehr nahe kommen oder sogar erreichen.

Der Vorteil dieses Verfahren liegt darin begründet, dass echte Kontakte zwischen den einzelnen Zahn-Modellen vorhanden sind und somit während des Simulationsprozesses die Bewegungen der Zahn-Modelle noch realistischer /realitätsnäher simuliert werden können, als wenn die Simulation mittels digitaler CAD-Bewegungssimulation stattfinden.

Die Viskosität ist ein Maß für die Zähflüssigkeit eines Fluids. Der Kehrwert der Viskosität ist die Fluidität, ein Maß für die Fließfähigkeit eines Fluids. Je größer die Viskosität, desto dickflüssiger (weniger fließfähig) ist das Fluid; je niedriger die Viskosität, desto dünnflüssiger (fließfähiger) ist es, kann also bei gleichen Bedingungen schneller fließen.

Option (ii) kann gewählt werden, um die simulierte Korrekturbewegung gegenüber der in vivo-Situation stark beschleunigt ablaufen zu lassen. Option (i) kann gewählt werden, um die simulierte Korrekturbewegung zwar gegenüber der *in vivo*-Situation beschleunigt, aber dennoch gegenüber Option (ii) verlangsamt ablaufen zu lassen - was die Aufnahme der Übergangsstadien erheblich erleichtert. Dabei bestimmt der Grad der Erniedrigung der Viskosität bzw. die absolute erreichte niedrige Viskosität die Geschwindigkeit, mit welcher die simulierte Korrekturbewegung abläuft - je niedriger die absolute erreichte Viskosität., desto schneller läuft die Bewegung ab.

Wichtig ist ferner, dass gemäß Option (ii) nicht zwingend die Viskosität des gesamten Einbettungsmaterials erniedrigt werden muss, sondern es ausreichen kann, wenn nur die Viskosität in Teilen des Einbettungsmaterials erniedrigt wird - beispielsweise im Bereich der Zahnwurzeln. Dazu später mehr.

Grundsätzlich ist es zulässig, dass die Bewegung sehr schnell abläuft - die Viskosität also sehr stark erniedrigt wird oder aber Einbettungsmaterial mindestens partiell vollständig entfernt wird, solange das in Schritt e) verwendete bildgebende Verfahren oder eines tracking-Verfahren schnell genug ist, dass es in der Lage, mindestens zwei Übergangsstadien ("Frames") der simulierten kieferorthopädischen Korrekturbewegung mit ausreichender Schärfe, Auflösung und Präzision aufzunehmen.

Da bildgebende Verfahren und tracking-Verfahren einer ständigen Weiterentwicklung mit einer resultierenden Leistungssteigerung unterliegen, kann und muss diesbezüglich keine Minimaldauer festgelegt werden.

Besagte Korrektureinrichtungen sind also eng an die in einer simulierten Bracket-Therapie erzeugten Stadien des Therapieverlaufs angelegt und daher - anders als bei Korrektureinrichtungen, die durch händisches Modellieren an einem Gipsmodell oder virtuelles Modellieren an einem CAD-Modell generiert werden - nicht der Subjektivität eines Behandlers oder Technikers ausgesetzt.

Überdies werden bei diesem Ansatz auch die Bewegungen der Zahnwurzeln berücksichtigt, die bei händischen Modellieren an einem Gipsmodell oder virtuellem Modellieren an einem CAD-Modell in aller Regel nicht berücksichtigt werden, was zu physisch nicht realisierbaren Korrekturbewegungen führen kann.
Bevorzugt ist ferner vorgesehen, das das Einbettungsmaterial mindestens abschnittsweise ein rheologisches Material aufweist.

Der Begriff "Rheologisches Material" bezeichnet ein Material, das im weiteren Sinne inhärente Fließeigenschaften aufweist, also insbesondere keine kristalline, sondern eine amorphe Struktur aufweist. Die physikalischen Kenngrößen eines Rheologischen Materials sind durch Viskosität und Fließgrenze bestimmt, wobei diese beispielsweise Druck- oder temperaturabhängig sein können.

Dabei kann besonders bevorzugt das rheologische Material nur Lokal im Einbettungsmaterial eingesetzt sein, beispielsweise im Bereich der Zahnwurzeln bzw. Kavitäten.

Ferner ist bevorzugt vorgesehen, dass das Einbettungsmaterial mindestens abschnittsweise ein thermoplastisches Material aufweist.

Thermoplastische Materialien lassen sich bei Erwärmung auf einen bestimmten Temperaturbereich verformen. Dieser Vorgang ist reversibel, das heißt er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Ein thermoplastisches Material verringert darüber hinaus seine Viskosität bei Temperaturerhöhung. Auf diese Weise kann die Simulation der kieferorthopädischen Korrekturbewegung in dem Modell beschleunigt ablaufen.

Ferner ist bevorzugt vorgesehen, dass das Einbettungsmaterial mindestens abschnittsweise ein Wachsmaterial aufweist.

Andere geeignete thermoplastische Materialien, die mindestens abschnittsweise im Einbettungsmaterial vorkommen können, umfassen Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) Polyvinylchlorid (PVC), Zelluloid und thermoplastische Silikone.

Dabei kann besonders bevorzugt das thermoplastische Material nur lokal im Einbettungsmaterial eingesetzt sein, beispielsweise im Bereich der Zahnwurzeln bzw. Kavitäten. Gerade in diesem Bereich kann eine lokale Erniedrigung der Viskosität beispielswiese durch Erwärmung dazu beitragen, dass die simulierte Korrekturbewegung ablaufen kann.

Weiterhin ist bevorzugt vorgesehen, dass die Zahnmodelle neben einer Zahnkrone einen Zahnhals sowie eine - ggf. vereinfacht ausgeführte - Zahnwurzel aufweisen.

Auf diese Weise können bei dem Simulationsprozess sterische Behinderungen bei der Korrekturbewegung, die in einer in vivo-Situation durch Zahnwurzeln verursacht werden, realitätsgetreu simuliert werden - anders als bei Korrektureinrichtungen, die durch händisches Modellieren an einem Gipsmodell oder virtuelles Modellieren an einem CAD-Modell generiert werden.

Dabei ist bevorzugt vorgesehen, dass besagte Zahnkonfiguration die Konfiguration im Unter- oder Oberkiefer eines Patienten, oder in einem Abschnitt desselben, reproduziert.

Besonders bevorzugt ist vorgesehen, dass das Modell des Kieferbogens Kavitäten aufweist, die vor Beginn des Simulationsschritts c) in Bezug auf Ihre Position und Ausrichtung in etwa dem Istzustand den Zahnfächern ("Sockets") der zu platzierenden Zahnmodelle entsprechen.

Weiterhin ist bevorzugt vorgesehen, dass das Modell eines Kieferbogens mit besagten Kavitäten hergestellt wird durch
a) Anfertigen eines 3D-Scans eines Ausgusses, welcher Ausguss anhand einer Abformung des Ober- oder Unterkiefers eines Patienten mit einem geeignetem Material erhalten wird,
b) Anfertigen eines CAD-Modells des Ist-Zustands des Ober- oder Unterkiefers des Patienten, oder eines Abschnitts desselben, und
c) virtuelles Entfernen der in dem CAD-Modell des Ist-Zustands repräsentierten Zähne nebst den dazugehörigen ggf. vereinfacht ausgeführten Zahnwurzeln, wobei in dem so erhaltenen Kieferbogen-CAD-Modell den entfernten Zahnwurzeln entsprechende Kavitäten generiert werden, und
d) Herstellen eines physischen Kieferbogen-Modells mit den betreffenden Kavitäten auf Basis des besagten Kieferbogen-CAD-Modells mittels einer CAM-Technik.

Dabei kann besonders bevorzugt vorgesehen sein, dass
a) mittels bildgebendem Verfahren ein CAD-Modell mindestens einer Zahnwurzel erzeugt wird, und
b) besagtes CAD-Modell dem Kieferbogen-CAD-Modell hinzugefügt wird.

Zur Erzeugung eines CAD-Modells einer Zahnwurzel kommen bevorzugt bildgebende Röntgenverfahren, wie die DVT (Digital Volume Tomography) oder bildgebende 3D Ultraschallverfahren in Frage.

Es ist ferner bevorzugt vorgesehen das Modell eines Kieferbogens mit besagten Kavitäten hergestellt wird durch
a) Anfertigen eines 3D-Scans eines Ausgusses, welcher Ausguss anhand einer Abformung des Ober- oder Unterkiefers eines Patienten mit einem geeignetem Material erhalten wird,
b) Anfertigen eines CAD-Modells des Ist-Zustands des Ober- oder Unterkiefers des Patienten, oder eines Abschnitts desselben, und
c) virtuelles Isolieren mindestens zweier in dem CAD-Modell des Ist-Zustands repräsentierten Zähne nebst den dazugehörigen ggf. vereinfacht ausgeführten Zahnwurzeln, und überführen derselben in ein Zahnkranz-CAD-Modell,
d) Herstellen eines physischen Modells eines Zahnkranzes aufweisend die in Schritt c) virtuell isolierten Zähne basierend auf dem Zahnkranz-CAD-Modell mittels einer CAM-Technik,
e) platzieren des physischen Modells des Zahnkranzes in dem Einbettungsmaterial dergestalt, dass letzteres Kavitäten ausbildet, die den ggf. vereinfacht ausgeführten Zahnwurzeln entsprechen, und
f) entfernen mindestens eines Teils des besagten physischen Modells des Zahnkranzes unter Zurücklassung der besagten Kavitäten.

In diesem Falle kann das wieder entfernte physische Modells des Zahnkranzes in einzelne Zahnmodelle zerteilt werden, die anschließend zwecks Durchführung des Verfahrens erneut in das Einbettungsmaterial platziert werden dergestalt, dass der Ist-Zustand einer Zahnkonfiguration eines Patienten reproduziert wird.

Ferner ist bevorzugt vorgesehen, dass sich an den Schritt des virtuellen Entfernens der in dem virtuellen CAD-Modell repräsentierten Zähne ein Schritt der Generierung, Überarbeitung und Speicherung mindestens eines Zahn-CAD-Modells eines so entfernten Zahns nebst der dazugehörigen ggf. vereinfacht ausgeführten Zahnwurzel anschließt.

Erfindungsgemäß können in diesem Schritt, wie weiter unten aufgeführt, die Ausnehmungen in ein Zahnmodell eingeführt werden.

Weiterhin ist bevorzugt vorgesehen, dass aufweisend den Schritt der Herstellung mindestens eines physischen Zahnmodells nebst - ggf. vereinfacht ausgeführter - Zahnwurzel auf Basis des besagten Zahn-CAD-Modells mittels einer CAM-Technik.

Erfindungsgemäß wird in das virtuelle oder das physische Zahnmodell eine erste Ausnehmung, vorzugsweise auch eine zweite Ausnehmung eingefügt.

Besonders bevorzugt ist die zweite Ausnehmung dergestaltet, dass die zweite Ausnehmung in einer zu der ersten verschieden verlaufenden Achse oder einem Winkel eingeführt wird.

Besonders bevorzugt ist vorgesehen, dass das oder die Zahnmodelle ein Material aufweisen ausgewählt aus der Gruppe Kunststoff, Metall, Keramik, und/oder Gips.

Dabei kann die Erniedrigung der Viskosität des Einbettungsmaterials durch Erwärmen - ggf. lokal beschränkt - desselben erfolgen.

Letzteres wird bevorzugt bewerkstelligt mit Hilfe mindestens eines Mittels ausgewählt aus der Gruppe
- Wasserbad
- Mikrowellen
- Infrarotlicht
- Thermosonde,
- Induktion, und/oder
- Wasserdampf.

In Bezug auf die Thermosonde ist bevorzugt an einen heizbaren Stab oder Bogen gedacht, der direkt auf das Einbettungsmaterial aufgelegt werden kann.

In Bezug auf Induktion ist vorgesehen, dass a) mindestens im Bereich der Kavitäten und/oder b) im Bereich der Wurzeln der Zahnmodelle dem betreffenden Material ein magnetisches Material beigemengt ist, beispielsweise Eisenspäne oder dergleichen, um auf diese Weise mittels Induktion ortsgenau Wärme zu erzeugen.

Besagter Wasserdampf kann Beispielsweise durch Kanäle geleitet werden, die im Einbettungsmaterial im Bereich der Zahnwurzeln angelegt sind, um dort zu einer thermisch bedingten Erhöhung der Viskosität zu führen.

Weiterhin ist bevorzugt vorgesehen, dass sich an den Schritt der Erniedrigung der Viskosität des Einbettungsmaterials zur Simulieren einer kieferorthopädischen Korrekturbewegung ein Schritt der Erhöhung der Viskosität des Einbettungsmediums anschließt, um den Simulationsprozess zu stoppen

Besagte Erniedrigung der Viskosität kann beispielsweise durch schnelles Abkühlen, beispielswiese mit flüssigem Stickstoff oder Eis, erfolgen.

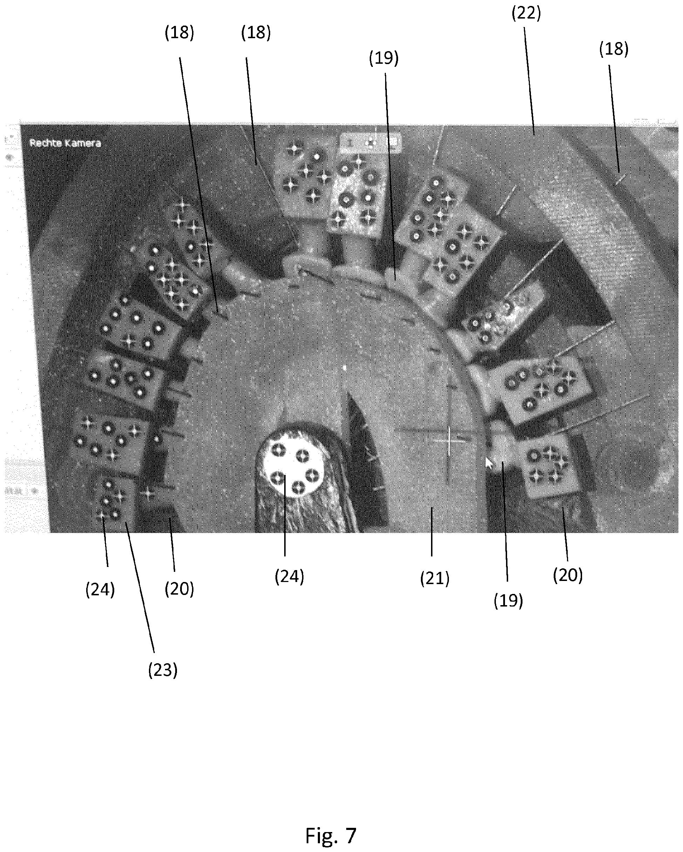

Erfindungsgemäß ist ferner bevorzugt vorgesehen, dass die Aufnahme der Übergangsstadien ("Frames") der simulierten kieferorthopädischen Korrekturbewegung mit Hilfe eines bildgebenden Verfahrens ausgewählt aus der Gruppe
a) Stereofotografie bzw. 3D-Fotografie
b) Stereovideografie bzw. 3D-Videografie
c) 3D-Realtime-Scanning
d) 3D-Tracking
e) berührende 3D-Vermessungsverfahren
f) Lichtfeld-Fotografie
erfolgt. Besagtes 3D-Tracking kann beispielsweise mit dem System ATOS Triple Scan der Firma GOM durchgeführt werden. Das Verfahren basiert auf der Registrierung und Verfolgung bestimmter Punkte, der so genannten "Tracking Points". Die Bewegung eines Objektes im 3-D Raum kann mit diesem Verfahren bei Verwendung von mindestens 3 Tracking points/Objekt verfolgt werden. Hierzu benötigt man zunächst man die Koordinaten der Punkte im Ist-Zustand. Dies können durch eine Aufnahme des Modells im Ist-Zustand (d.h. vor Beginn der simulierten Korrekturbewegung) erhalten werden. Die Software kann die Position dieser Punkte während der Bewegung verfolgen und somit die genaue Position des Objektes nach oder während der Bewegung bestimmen. In Abbildung 7 ist das Kieferbogenmodell mit diesen Markierungspunkten ausgestaltet, die sich an Ausstülpungen der Zahnmodelle befinden.

Für die Dateneingabe kann ein bildgebendes Verfahren oder ein berührendes 3D-Vermessungsverfahren oder eine Kombination der beiden Methoden verwendet werden.

Berührende 3D-Vermessungsverfahren beruhen auf sogenannten Koordinatenmessarmen, wie dies beispielsweise von der Firma FARO Technologies angeboten werden.

Lichtfeldkameras unterscheiden sich in ihrem Aufbau von anderen Kameras. Eine Lichtfeldkamera verfügt über einen Bildsensor, welcher sich hinter einem speziellen Linsengitter befindet. Dank der zahlreichen Linsen fallen nicht einzelne Lichtpunkte auf den Sensor, vielmehr wird jeder Lichtpunkt zu einem Kreis erweitert. Die zwischen dem Objektiv sowie dem Sensor angeordneten Mikrolinsen tragen dafür Sorge, dass nicht bloß die Menge des einfallenden Lichts, sondern dazu auch dessen Ausbreitungsrichtung erfasst werden kann. Aus diesen Informationen lassen sich dann wiederrum virtuelle Schärfeebenen berechnen, die es schließlich ermöglichen, nach der Aufnahme eines Bildes noch entscheidende Modifikationen an diesem vorzunehmen. Das mit einer Lichtfeldkamera aufgenommene Lichtfeld enthält eine derart große Zahl an Informationen, dass ohne Probleme zwischen einem dreidimensionalen und einem zweidimensionalen Bild gewechselt und dabei auch problemlos die Schärfentiefe verändert werden kann. Auf diese Weise können auch dreidimensionale Abbildungen, die im Kontext der vorliegenden Erfindung verwendbar sind, erzeugt werden. Lichtfeldkameras werden beispielsweise von der Firma Raytrix GmbH angeboten.

Ferner ist bevorzugt vorgesehen, dass ein kieferorthopädisches Setup mindestens eines Übergangsstadiums auf Basis der gewonnenen digitalen Daten des betreffenden Übergangsstadiums mittels einer CAM-Technik hergestellt wird.

Dies kann beispielsweise durch 3D-Plotten oder CNC-Fräsen oder RP-Verfahren (Rapid-Prototyping) wie Stereolithographie, Laser-Sintern, SLM (Selective Laser Melting), eines Setups basierend auf Daten erfolgen, die einem eingescannten Bild eines Übergangsstadiums oder eines Sollzustands entnommen sind.

Ferner ist bevorzugt vorgesehen, dass sich an die Aufnahme eines Übergangsstadiums mindestens einer der folgenden Schritte anschließt:
a) Fotogrammetrische Identifikation von mindestens zwei geometrischen Koordinaten der Position eines Zahns in besagtem Übergangsstadium
b) Zuordnung besagter geometrischen Koordinaten zu eingangs gewonnenen entsprechenden Koordinaten desselben Zahns im Ist-Zustand angeboten.
c) Simulation bzw. Nachvollziehen der Korrekturbewegung des besagten Zahns,
d) Erstellung eines digitalen Datensatzes des besagten Übergangsstadiums, und
e) Herstellung mindestens eines kieferorthopädischen Setups eines Übergangsstadiums, wobei besagtes Setup mittelbar oder unmittelbar auf einem Modell basiert, das Basis der dergestalt gewonnenen digitalen Daten mittels einer CAM-Technik hergestellt wurde.

Besagte Simulation bzw. besagtes Nachvollziehen der Korrekturbewegung kann beispielsweise die Zuordnung der aufgenommenen Koordinaten eines Zahnmodells in einem Übergangsstadium zu den Koordinaten desselben Zahnmodells im Ausgangs- bzw. Istzustand umfassen.

Fotogrammetrie ist eine Gruppe von Messmethoden und Auswerteverfahren der Fernerkundung, um aus Fotografien und genauen Messbildern eines Objektes seine räumliche Lage oder dreidimensionale Form zu bestimmen. Im Regelfall werden die Bilder mit speziellen Messkameras aufgenommen.

Ferner ist bevorzugt vorgesehen, dass vor
a) dem Platzieren von Zahnmodellen in einem Modell eines Kieferbogens oder eines Abschnitts desselben oder
b) dem Anbringen von mindestens zwei Brackets auf der Oberfläche mindestens zweier Zahnmodelle
   ein reales oder virtuelles Modell eines End-Korrekturzustandes (klinisch bzw. ästhetisch zu erreichenden Sollzustandes) eines Ober- und/oder Unterkiefers bzw. eines Abschnitts desselben erzeugt wird, an diesem realen oder virtuellen Modell mindestens
   - ein reales oder virtuelles Zugelement bzw. ein Modell desselben und
   - mindestens ein reales oder virtuelles Bracket bzw. ein Modell desselben platziert wird und auf Basis dieses Schritts das Design der Brackets definiert wird.

In dieser Ausführungsform wird also zunächst durch den Behandler ein anzustrebendes Ergebnis ("Soll-Zustand") vorgegeben. Der Behandler kann nun Brackets auf das Modell des Soll-Zustands - gleich ob in realiter oder in silico - aufbringen und ein Zugelement an die Brackets anordnen. Die Brackets können in Ihrer Formgebung entweder real verwendeten Brackets entsprechend oder aber auch stark vereinfachte Bracketmodelle sein, solange sie geeignet sind, die realen Zug- und Druckverhältnisse eines echten Brackets zu reproduzieren.

Vorstehend Gesagtes trifft auch auf die Verwendung der Ausnehmungen zu, mit der Maßgabe, dass hierbei nur für je ein Zahnmodell die reale oder virtuelle Ausnehmung berechnet wird, und ggf. ein reales oder virtuelles Zugelement platziert wird. Vorzugsweise werden zwei Ausnehmungen an einem Zahnmodell platziert.

In der herkömmlichen Bracket-Therapie werden die Brackets auf den Zähnen so platziert, dass ein Zugelement, das an den Brackets angeordnet wird, bei besagtem Schritt stark verformt wird. Das Zugelement hat nunmehr das Bestreben, in seine Ausgangsform zurückzukehren, und übet dabei durch Rückstellungskräfte bewirkte Kräfte auf die zu korrigierenden Zähen aus, die letztlich in einer Korrekturbewegung einmünden. Dabei wird die Richtung der Korrekturbewegung in Bezug auf einen Zahn durch die Lage und Anordnung des Brackets sowie die Form der Interaktion mit dem Zugelement - beispielsweise also durch die Form und Ausrichtung eines Kanals oder einer Führung am Bracket, durch welche das Zugelement geleitet wird - bestimmt.

Gemäß der hier besprochenen Ausführungsform wird der Behandler die Brackets an dem reellen oder virtuellen Modell des Sollzustands also so platzieren, dass das Zugelement, das dann an den Brackets angeordnet wird, weitgehend unverformt ist - und folglich dem bei einer herkömmlichen Bracket-Therapie zu erreichenden Endzustand entspricht, der ja durch die Rückstellungskräfte des Zugelements herbeigeführt wird. Auf diese Weise können die Brackets genauso positioniert und ausgerichtet werden, dass sie auf besagten Zähnen - wenn diese sich im Ist- und nicht im Sollzustand befinden - stets eine Korrekturbewegung hervorrufen, die zu dem vom Behandler bestimmten Sollzustand werden. Die Brackets lassen sich auf diese Weise also gleichsam "programmieren".

Der Behandler kann dann die Realmodelle der Zähne mit darauf platzieren Brackets nehmen und gemäß dem erfindungsgemäßen Verfahren in dem Modell des Kieferbogens oder eines Abschnitts desselben welches den Ist-Zustand einer Zahnkonfiguration eines Patienten reproduziert, platzieren. Dabei verwendet er bevorzugt die oben besprochene Schablone.

Alternativ kann die Platzierung der Zahnmodelle auch manuell unter Berücksichtigung der gewonnenen Daten mithilfe geeigneter Software, die den Positionierungsvorgang mithilfe eines bildgebenden Verfahrens unter Berücksichtigung eines den Ist-Zustand betreffenden Datensatzes überwacht, erfolgen. Eine andere Alternative besteht darin, Zahnmodelle maschinell oder robotisch unter Berücksichtigung unter Berücksichtigung eines den Ist-Zustand betreffenden Datensatzes durchzuführen.

Falls die Platzierung der Brackets im CAD-Modell erfolgt, kann der Behandler nunmehr die Zähne mitsamt der darauf platzierten Brackets - ggf nach vorheriger virtueller Entfernung des Zugelements - per CAM-Verfahren erzeugen und gemäß dem erfindungsgemäßen Verfahren in dem Modell des Kieferbogens oder eines Abschnitts desselben platzieren.

Weiterhin ist in einer bevorzugten Ausführungsform ferner vorgesehen, dass vor
c) dem Anbringen von mindestens einem, bevorzugt zwei, Zugelementen in ein Zahnmodell
   ein reales oder virtuelles Modell eines End-Korrekturzustandes (klinisch bzw. ästhetisch zu erreichenden Sollzustandes) eines einzigen Zahnmodells erzeugt wird,
   an diesem realen oder virtuellen Modell
   mindestens eine reale oder virtuelle Ausnehmung bzw. ein Modell desselben
   und ggf. mindestens ein reales oder virtuelles Zugelement bzw. ein Modell desselben platziert wird,
   und auf Basis dieses Schritts das Design der Ausnehmung zur Aufnahme des Zugelementes definiert wird.

Besonders bevorzugt wird eine erste Ausnehmung für ein erstes Zugelement und eine zweite Ausnehmung für ein zweites Zugelement an/in einem Modell platziert.

So kann die erste Ausnehmung entlang einer anderen Achse als eine zweite Ausnehmung verlaufen. Erfindungsgemäß verlaufen die Ausnehmungen in einem Winkel zu einander. Dabei muss der Winkel so gewählt werden, dass die einzuführenden Zugelemente eine Rückstellkraft auf das jeweilige Zahnmodell ausüben, die groß genug ist damit der Zahn von seiner Ist-Zahnstellung in die Soll-Zahnstellung überführt wird. Daher können die Winkel der Ausnehmungen zueinander beliebig groß oder klein sein, je nach Schiefstellung des zu korrigierenden Zahns. Dies kann mittels gängiger Software berechnet werden. Beispielsweise kann eine Ausnehmung waagrecht zur Kaufläche des Zahns und eine senkrecht zur Kaufläche des Zahns in das reale oder virtuelle Zahnmodell mittels gängiger Techniken eingebracht werden. Im Falle dass nur eine geringe oder keine Korrektur erfolgen soll, kann auch nur ein Zugelement in ein Zahnmodell oder zwei parallel zueinander verlaufende Zugelemente eingeführt werden.

Bevorzugt weisen die beiden Ausnehmungen einen Winkel von 0 bis 180°, bevorzugt 10°; 20°, 30°, 40°, 50°, 60°, 70°, 80°, 90°, 100,°, 110°, 120°, 130°, 140°, 150°, 160°; 170° oder 180° +/- 3° auf. Weiterhin bevorzugt weist die erste Ausnehmung einen Winkel zu der zweiten Ausnehmung von, 60° - 140°, 65° -130°, 70° - 120°, bevorzugt 80° bis 100°, besonders bevorzugt von 85° bis 95° Grad auf. Besonders bevorzugt weist die erste Ausnehmung in einem Winkel von nahezu 90° Grad, d.h. +/- 5°Grad, zu der zweiten Ausnehmung auf. Dabei ist ein 90° Winkel keine zwingende Voraussetzung. Beispielsweise reichen zwei Fixpunkte, bspw. zwei Drähte in je einer Ausnehmung aus um die Zahnstellung während des Simulationsprozesses zu korrigieren.

Gemäß der einen Ausführungsform wird der Behandler die Ausnehmung an einem virtuellen Modell des Sollzustands so platzieren, dass das Zugelement, das dann an der Ausnehmung angeordnet wird, weitgehend unverformt ist - und folglich dem bei einer herkömmlichen kieferorthopädischen-Therapie zu erreichenden Endzustand entspricht, der durch die Rückstellungskräfte des Zugelements herbeigeführt wird. Auf diese Weise kann die Ausnehmung genauso positioniert und ausgerichtet werden, dass sie auf besagten Zahn - wenn dieser sich im Ist- und nicht im Sollzustand befindet - stets eine Korrekturbewegung hervorruft, die zu dem vom Behandler bestimmten Sollzustand werden. Die Ausnehmung lässt sich auf diese Weise also gleichsam "programmieren" wie dies für ein Bracket geschieht.

Erfindungsgemäß wird mittels gängiger digitaler Verfahren der Ist-Zustand des Patientenkiefers anhand eines Gebissabdrucks oder direkt mittels 3D Scan Technik erstellt. Weiterhin erfolgt digital die Separierung der einzelnen Zähne. Anschließend wird jeder Zahn bzw. Zahnmodell aus dem Ist-Zustand mittels mindestens einer Dreh/Schwenkbewegung und/oder Rotation entlang einer, zwei oder aller drei X, Y oder Z Achsen im Koordinatensystem nach Andrew, in eine den Normwerten des jeweiligen Zahns entsprechende Soll-Zustand/Position überführt. Die (Torque, Angulation und In-Out)werte für die Normwerte eines jeweiligen Zahns sind dem Fachmann bekannt. Da diese Korrektur ohne Wissen der genauen räumlichen Position des Zahns im Kieferbogen geschehen kann, werden erfindungsgemäß nur vier und nicht alle sechs Freiheitsgrade für den jeweiligen Zahn bzw. Modell bestimmt. Erfindungsgemäß wird somit ein einfacheres, d.h. fehlerunanfälliges Verfahren bereit gestellt, da die Lage/Position der Zahnmodelle in dem Kieferbogen nicht beachtet werden müssen.

Im Sinne der vorliegenden Erfindung wird sobald das Zahnmodell die Soll-Stellung erreicht hat, die Position und Ausrichtung der Ausnehmung digital in dem Zahnmodell mittels gängiger Software festgelegt. Die Ausnehmung selbst kann anschließend während der Fertigung des physikalischen Zahnmodells z.B. durch CAM Verfahren oder nachträglich mittels Bohrung eingebracht werden.

Die so erhaltenen Zahnmodelle werden in eine Kavität eines Abschnittes eines Alveolarkamms/Kieferbogenmodells wie vorstehend definiert eingebracht (Schritt a), der den Ist-Zustand des Patientenkiefers bzw. eines Abschnitts davon, darstellt. Dadurch weist jedes der erfindungsgemäßen Zahnmodelle einerseits wieder den Ist-Zustand wie in dem Patientenkiefer auf, wobei jedoch die Ausnehmungen den Soll-Zustand des Zahnmodells bestimmen. Das oben genannte Verfahren ist vergleichbar mit Anbringung von Brackets.

Anschließend wird durch das jeweilige Zahnmodell, dass die Ausnehmung aufweist, ein Zugelement durch die Ausnehmungen geführt, die je nach Ist-Zuband des Zahnmodells abgelenkt bzw. gekrümmt werden. Dadurch wird ein Zug/Druck auf die Zahnmodelle aufgebaut. Optional kann das Zugelement an seinen Enden fixiert werden. Dies kann die Rückstellkraft des Zugelements vergrößern und/oder aber durch die Fixierung lassen sich die Zugelemente einfacher in das Zahnmodell einführen.

Sobald wie unter (i) und (ii) beschreiben das Einbettungsmaterial abgebaut wird, richten sich die Zahnmodelle durch den Druck oder Zug neu aus, da die Zugelemente (Drähte) wieder die Möglichkeit haben in ihre ursprüngliche, gerade Form zurückzukehren. Dies wird durch die Ausnehmungen gesteuert. Nach Ablauf des erfindungsgemäßen Verfahrens haben sich alle Zahnmodelle soweit wie möglich ihrem Soll-Zustand angenähert.

Bevorzugt werden an allen Zahnmodellen eines Patientenkiefermodells Ausnehmungen eingeführt. Jedoch ist ein Vorteil der Erfindung, dass nicht zwingend jedes Zahnmodell eine oder mehrere Ausnehmungen aufweisen muss. Daher kann eine Simulation einer kieferorthopädischen Behandlung auch für solche Gebisssituationen bereitgestellt werden, in denen, bereits Zähne eine ideale Stellung haben, oder Implantate bzw. Stiftzähne/Kronen/Inlays im Kiefer des Patienten vorhanden sind.

Die Zugelemente können an ihren Enden fixiert werden. Beispielsweise kann eine Art starrer Rahmen verwendet werden, in dem die Drähte/Seile ebenfalls durchgeführt werden und der um das Kiefermodell gelegt bzw. befestigt wird. Auch kann an den Enden der Zugelemente/Drähte Markierungseinheiten angebracht werden um die Bewegung der Drähte mittels einer Tracking Verfahrens oder einer Videokamera aufzunehmen. Diese Markierungseinheiten können auch indirekt and die Zahnmodelle angebracht werden oder als Ausstülpungen an den Zähnen vorhanden sein.

Das erfindungsgemäße Verfahren weist zu zudem weitere Vorteile zu dem Stand der Technik auf. Denn erstmals wird ein Verfahren bereitgestellt, in dem die Simulation mittels physikalischen Zahnmodellen durchgeführt wird und somit erfindungsgemäß echte Kontakte zwischen einzelnen Zahnmodellen vorhanden sind. Dadurch laufen die Bewegungsvorgänge der Zahnmodelle anatomisch, physiologisch realistischer (anatomisch, physiologisch) ab, als wenn diese Bewegungen mit einer CAD-Bewegungssimulationssoftware vorgenommen wird.

In einer bevorzugten Ausführungsform weist das Zugelement vorzugsweise bzw. mindestens in Verbindung mit einer Ausnehmung mindestens eine Eigenschaft auf, die ausgewählt ist aus der Gruppe bestehend aus: flexibel, elastisch, verformbar, thermostabil, superelastisch, gut biegbar, form- und schweißbar, bruchsicher.

Besonders bevorzugt im Rahmen der vorliegenden Erfindung besteht der Draht zumindest teilweise aus einer Formgedächtnis-Legierungen (FGL) oder im Englischen shape-memory alloys (SMA). Je nach Legierungszustand erfolgt diese Umkehr entweder unmittelbar nach der Entlastung als pseudoelastisches bzw. superelastisches Verhalten oder nach Erwärmung oberhalb einer legierungsspezifischen Temperatur mit einem Formgedächtnis-Effekt. Zu den wichtigsten Formgedächtnislegierungen zählen Cu-Zn-X (X: Si, Sn, Al)-Legierungen und die intermetallische NiTi-Legierung (Nickelgehalt von ca. 55 gew.%). Dem Fachmann sind auch andere Zugelemente bekannt, die eine vergleichbare Funktion wie der hier beschriebene Draht ausüben können. So kann auch ein Seil oder ein Stift verwendet werden. Ebenfalls kann das Zugelement auch bereits in/an dem Modell des Kieferbogens und/oder in dem Einbettungsmaterial vorhanden sein.

Erfindungsgemäß ist ferner ein kieferorthopädisches Setup bzw. ein Satz mehrerer Kieferorthopädischer Setups vorgesehen, die hergestellt sind mit einem Verfahren gemäß einem der vorherigen Ansprüche.

Dabei können die verschiedenen Setups inkrementelle Übergangstadien der Zahnkorrekturbewegung darstellen.

Ferner ist erfindungsgemäß ein Verfahren zur Herstellung mindestens eines kieferorthopädischen Aligners vorgesehen, wobei besagter Aligner durch Tiefziehen eines geeigneten Materials an einem kieferorthopädischen Setup gemäß einem der vorhergenannten Ansprüche hergestellt wird.

Mit Hilfe der genannten verschiedenen Setups darstellend inkrementelle Übergangstadien kann so ein Satz inkrementeller Aligner erzeugt werden, die nacheinander von einem Patienten getragen wurden, um eine sukzessive Korrekturtherapie durchzuführen.

Erfindungsgemäß ist ferner ein Aligner bzw. Satz von Alignern vorgesehen, hergestellt mit einem Verfahren gemäß einem der vorherigen Ansprüche. Besagter Satz von Alignern kann bevorzugt ein Satz inkrementeller Aligner gemäß obiger Beschreibung sein.

### Abbildungen

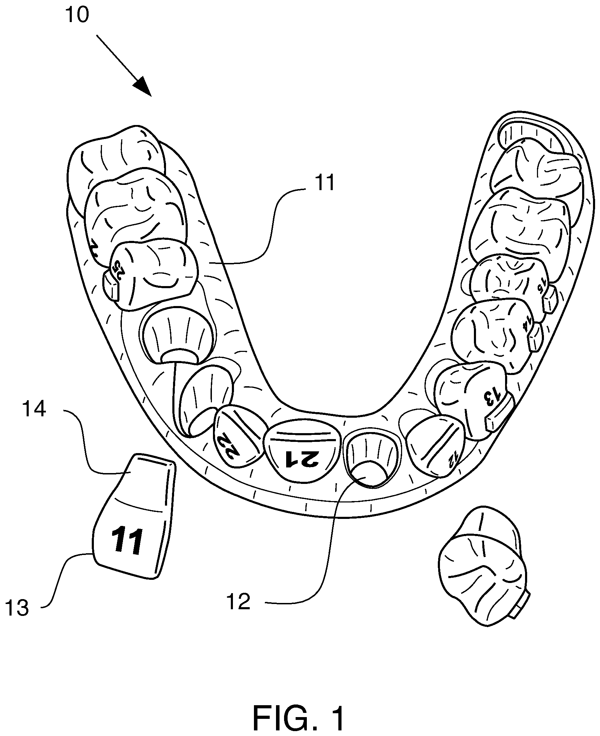

Fig. 1 zeigt ein Kieferorthopädisches Setup 10 gemäß der vorliegenden Erfindung. Der Setup weist ein Alveolarkamm-Modell 11, das Kavitäten 12 für die Aufnahme von Zahnmodellen 13 aufweist, sowie Zahnmodelle 13, die in besagtem Alveolarkamm-Modell 11 platziert werden können.
   Die Zahnmodelle 13 weisen neben einer Zahnkrone einen Zahnhals sowie eine vereinfacht ausgeführte Zahnwurzel 14 auf. Abweichend von der sehr vereinfachten Form der Zahnwurzeln in Fig. 1 können die Zahnwurzeln auch realitätsgetreuer ausgestaltet sein. In Bezug auf Vorteile dieser Ausgestaltung wird auf die Beschreibung verwiesen.
   Die Kavitäten 12 in besagtem Alveolarkamm-Modell 11 sind in ihrer Form und/oder Ausrichtung so ausgestaltet, dass sie die Orientierung der betreffenden Zahnmodelle 13 in allen sechs Freiheitsgraden bestimmen.
   Das Alveolarkamm-Modell 11 und die Zahnmodelle 13 sind mit Hilfe von CAM-Techniken hergestellt. Dabei 10 wurden die Zahnmodelle 13 mit Hilfe eines relativ hochauflösenden CNC-Fräsverfahrens aus Titan hergestellt, während das Alveolarkamm-Modell 12 mit Hilfe eines relativ niedrig auflösenden 3D-Druckverfahrens hergestellt wurde. In Bezug auf Vorteile dieser Ausgestaltung wird auf die Beschreibung verwiesen.

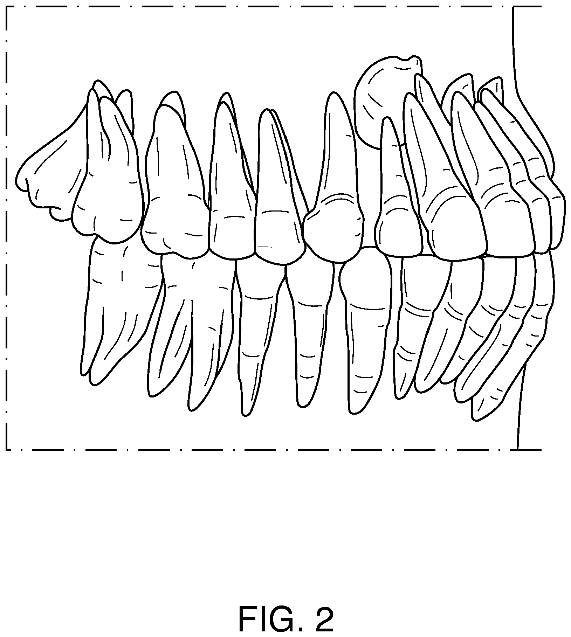

Fig. 2 zeigt ein Virtuelles Modell, bei welchem ein virtuellen Modell des Ist-Zustands des Ober- oder Unterkiefers des Patienten mit einem virtuellen Modell der Zahnwurzeln des Patienten kombiniert ist. In Bezug auf Vorteile dieser Ausgestaltung wird auf die Beschreibung verwiesen.

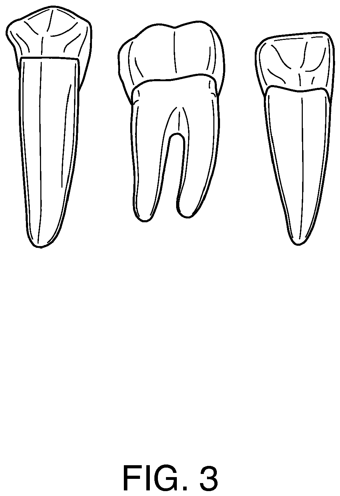

Fig. 3 zeigt Zahnmodelle, die im Unterscheid zu den in Fig. 1 gezeigten Zahnmodellen realitätsgetreuer ausgestaltete Zahnwurzeln aufweisen. In Bezug auf Vorteile dieser Ausgestaltung wird auf die Beschreibung verwiesen.

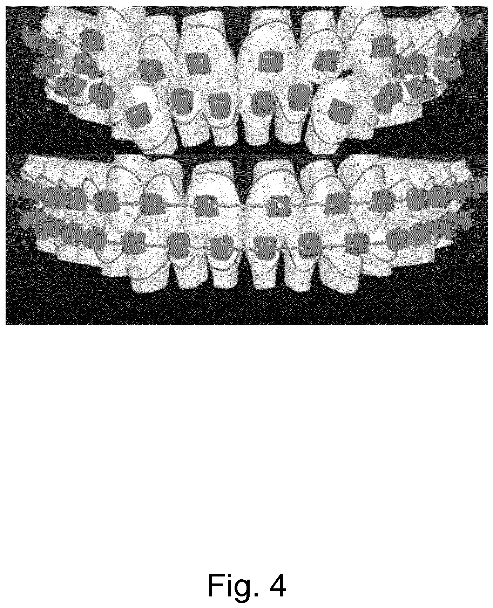

Fig. 4 zeigt ein virtuelles Modell eines Zahnsatzes mit darauf angeordneten virtuellen Bracket-Modellen - ohne (oben) und mit (unten) virtuellem Modell eines Zugelements. Die Bracket-Modelle lassen sich ganz so wie reelle Brackets bewegen und in Ihrer Position manipulieren. Die Brackets können in Ihrer Formgebung entweder real verwendeten Brackets entsprechend oder aber auch stark vereinfachte Bracketmodelle sein, solange sie geeignet sind, die realen Zug- und Druckverhältnisse eines echten Brackets zu reproduzieren.
   Gemäß der einen Ausführungsform wird der Behandler die Brackets an einem virtuellen Modell des Sollzustands so platzieren, dass das Zugelement, das dann an den Brackets angeordnet wird, weitgehend unverformt ist - und folglich dem bei einer herkömmlichen Bracket-Therapie zu erreichenden Endzustand entspricht, der ja durch die Rückstellungskräfte des Zugelements herbeigeführt wird. Auf diese Weise können die Brackets genauso positioniert und ausgerichtet werden, dass sie auf besagten Zähnen - wenn diese sich im Ist- und nicht im Sollzustand befinden - stets eine Korrekturbewegung hervorrufen, die zu dem vom Behandler bestimmten Sollzustand werden. Die Brackets lassen sich auf diese Weise also gleichsam "programmieren".

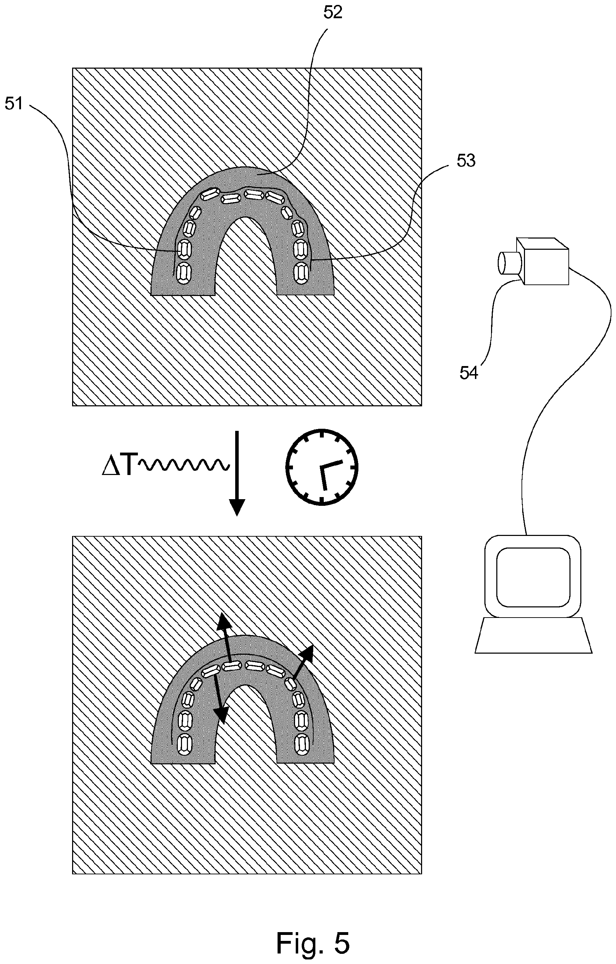

Fig. 5 zeigt einen schematischen Ablauf des erfindungsmäßen Verfahrens zur Herstellung mindestens eines kieferorthopädischen Setups. Dieses umfasst a) das Platzieren von Zahnmodellen 51 in einem Modell eines Kieferbogens 52 aufweisend ein Einbettungsmaterial dergestalt, dass der Ist-Zustand einer Zahnkonfiguration eines Patienten reproduziert wird, um ein Modell der Zahnkonfiguration ("typodont") zu erhalten b) das Anbringen von Brackets (nicht dargestellt) auf der Oberfläche mindestens zweier Zahnmodelle, c) das Anbringen eines Zugelements 53 an den Brackets dergestalt, dass ein Zug oder Druck auf die Zahnmodelle ausgeübt wird, d) die Simulieren einer kieferorthopädischen Korrekturbewegung (→) in dem Modell der Zahnkonfiguration aufgrund des ausgeübten Zugs oder Drucks durch Erniedrigung der Viskosität des Einbettungsmaterials mittels lokal beschränktem Erwärmen (ΔT), e) die Aufnahme von Übergangsstadien der simulierten kieferorthopädischen Korrekturbewegung in dem Modell der Zahnkonfiguration ("typodont") mit Hilfe eines bildgebenden Verfahrens 54 (nicht dargestellt), f) die Gewinnung von digitalen Daten, die mittelbar oder unmittelbar die Positionen mindestens eines Zahnmodells in dem Modell der Zahnkonfiguration in Bezug auf mindestens zwei aufgenommene Übergangsstadien beschreiben, und g) die Herstellung eines kieferorthopädischen Setups eines Übergangsstadiums (nicht dargestellt).

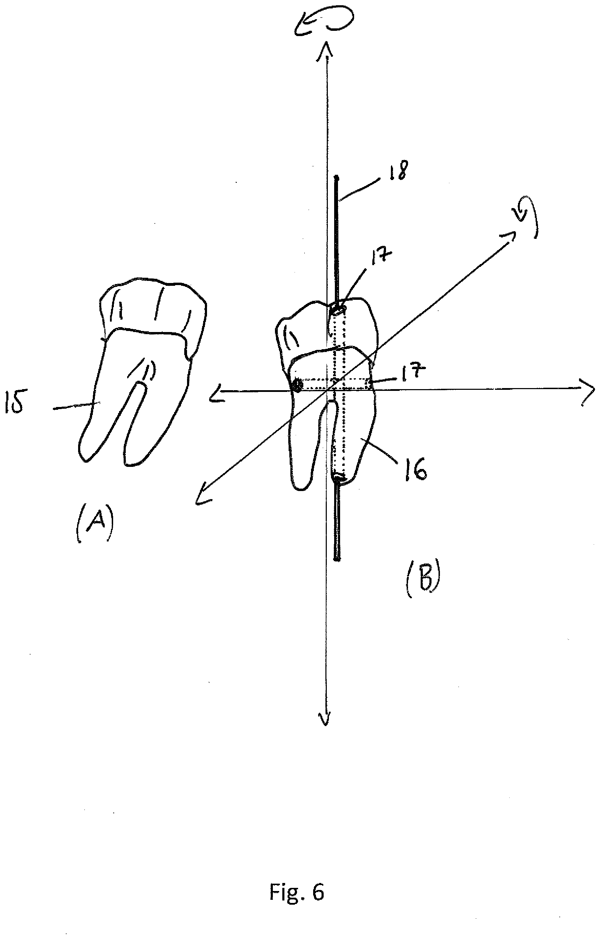

Fig. 6.: Das Funktionsprinzip einer weiteren Ausführungsform ist dargestellt. In (A) ist der Ist-Zustand eines Zahns (15) (schief) dargestellt, wie dieser in einer geeigneten z.B. CAD Software visualisiert wird. Dieses Zahnmodell wird vom Behandler digital in die SollPosition (B) gebracht, der folglich dem, bei einer herkömmlichen kieferorthopädischen-Therapie, zu erreichenden Endzustand entspricht. Anschließend werden die Ausnehmungen (17) berechnet und eingeführt. Dabei werden die Ausnehmungen so platziert, dass die Zugelemente (18) in der Soll-Zahnstellung unverformt durch die Kanäle (17) geführt werden können (B). Das digitale Zahnmodell mit den Ausnehmungen (16) wird anschließend mittels CAM-Verfahren hergestellt und kann in ein Modell eines Kieferbogens eingebracht werden.
Abb. 7. Draufsicht auf ein weiteres Kieferbogenmodell (25) aus Sicht eines Scanners/Kamera vor Beginn der Simulation einer Korrekturbewegung, die Zahnmodelle mit Ausnehmungen aufweisen. Wahlweise und abhängig von der Patientengebisssituation werden in ausgewählte oder alle Zahnmodelle (15) Kanäle (17), wie vorstehend (Fig. 6) beschrieben, eingeführt. Anschließend werden die Zahnmodelle (16), mit den Ausnehmungen als physikalisches Modell hergestellt (19). Diese werden in das Einbettungsmaterial mittels einer Schablone eingesetzt (Schritt a) und nehmen so, wie vorstehend beschrieben, ihre Ist-Position wie im realen Patientenkiefer ein. Nun können die Zugelemente (18) an den Zahnmodellen (19) befestigt werden. Hierbei wird je Zahnmodell ein erster Draht (18) durch den ersten senkrechten Kanal (17) durchgeschoben, wobei der Draht (18) von oben durch die Zahnkrone (13) bis unten durch die ggf. vorhandene Wurzel (14) in die Einbettungsmasse (20) senkrecht in den Kanal eingeführt wird, wobei der Draht durch die Schiefstellung des Zahns verbogen bzw. unter Spannung gesetzt wird. Anschließend wird der zweite Draht (18) durch den zweiten Kanal (17), der hier waagerecht zur Kauflächenebene des Zahns verläuft, durch die Zahnkrone (13) durchgeführt. Dabei wird der zweite Draht abhängig von der Schiefstellung des Zahns verbogen. Dies wird für alle weiteren zu korrigierenden Zähne durchgeführt.
   Wie in Fig. 7 dargestellt werden die Drähte (18) zusätzlich durch einen inneren Rahmen (21) und durch einen äußeren Rahmen (22) fixiert. Dadurch ist diese Anordnung unter Anderem mobil, d.h. tragbar. Für weitere Vorteile bei der Verwendung eines Rahmens siehe die Beschreibung. Wie ersichtlich, tragen die Zahnmodelle plättchenhafte Ausstülpungen (23) an den drei bis 7 Markierungspunkte (24) angebracht sind. Ebenfalls sind Markierungspunkte in der Mitte des inneren Rahmens (21) angebracht. Dieses Setup ermöglicht, dass anstatt einer einfachen Kamera gleichzeitig oder alternativ ein Trackingverfahren die Simulation aufzeichnen kann. Sobald das Kieferbogenmodell (25) mit den Rahmen unter einen Scanner bzw. eine Kamera gelegt wurde, werden die Schritte d) bis g) wie vorstehend beschrieben und in Fig. 5 illustriert, durchgeführt.

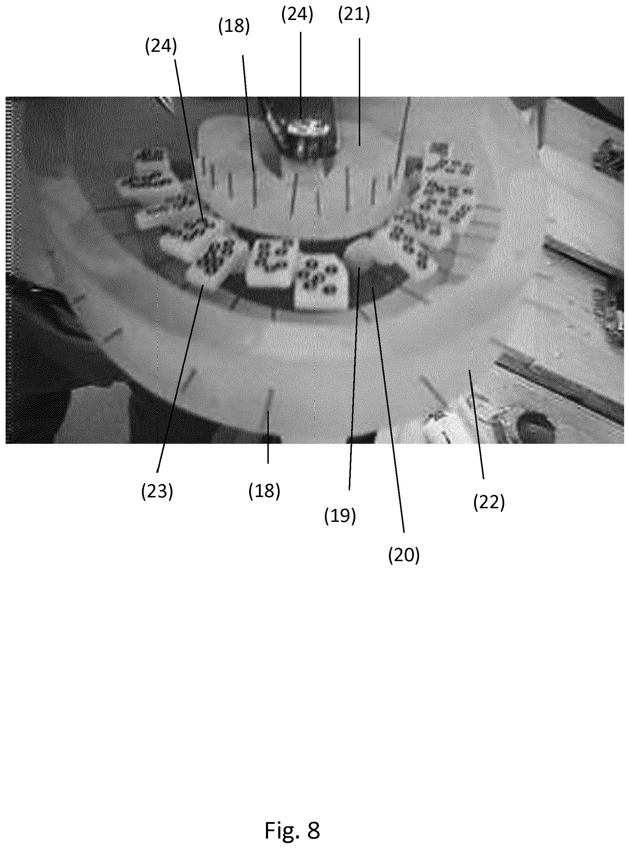

In Fig. 8 ist das Kieferbogenmodell (25) wie zur Fig. 7 beschrieben, aus einer anderen Perspektive dargestellt. Wie in dieser Seitenansicht ersichtlich, sind die Zahnmodelle nur im Einbettungsmedium (20), dass die Kavitäten (12) des Ist-Zustandes des Patientenunterkiefers aufweist, fixiert und berühren den inneren Rahmen nicht.

## Patentansprüche

1. Verfahren zur Herstellung mindestens eines kieferorthopädischen Setups (10), aufweisend
a) das Platzieren von Zahnmodellen (19, 51) in einem Modell eines Kieferbogens (52, 25) oder eines Abschnitts desselben aufweisend ein Einbettungsmaterial (20) dergestalt, dass der Ist-Zustand einer Zahnkonfiguration eines Patienten reproduziert wird, um ein Modell der Zahnkonfiguration, z.B. Typodont, zu erhalten,
b) Anbringen mindestens eines Zugelements (53) mittelbar oder unmittelbar an mindestens zwei Zahnmodellen (51) dergestalt, dass ein Zug oder Druck auf die Zahnmodelle (51) ausgeübt wird, oder
Anbringen mindestens eines Zugelements (18) an mindestens einem Zahnmodell (19) dergestalt, dass ein Zug oder Druck auf das Zahnmodell (19) ausgeübt wird,
c) Simulieren einer kieferorthopädischen Korrekturbewegung in dem Modell der Zahnkonfiguration aufgrund des ausgeübten Zugs oder Drucks durch
(i) Erniedrigung der Viskosität des Einbettungsmaterials (20) oder Teilen desselben
(ii) mindestens partielles Entfernen des Einbettungsmaterials
d) Aufnahme mindestens zweier Übergangsstadien, z.B. Frames, der simulierten kieferorthopädischen Korrekturbewegung in dem Modell der Zahnkonfiguration mit Hilfe eines bildgebenden Verfahrens oder eines tracking-Verfahrens
e) Gewinnung von digitalen Daten, die mittelbar oder unmittelbar die Positionen mindestens eines Zahnmodells (19, 51) in dem Modell der Zahnkonfiguration in Bezug auf mindestens zwei aufgenommene Übergangsstadien beschreiben, und
f) Herstellung mindestens eines kieferorthopädischen Setups eines Übergangsstadiums, wobei besagtes Setup mittelbar oder unmittelbar auf einem Modell basiert, das auf Basis der dergestalt gewonnenen digitalen Daten mittels einer CAM-Technik hergestellt wurde.

2. Verfahren gemäß einem der vorherigen Ansprüche, wobei das Einbettungsmaterial (20) mindestens abschnittsweise ein rheologisches Material aufweist.

3. Verfahren gemäß einem der vorherigen Ansprüche, wobei das Einbettungsmaterial (20) mindestens abschnittsweise ein thermoplastisches Material aufweist.

4. Verfahren gemäß einem der vorherigen Ansprüche, wobei die Zahnmodelle neben einer Zahnkrone (13) einen Zahnhals sowie eine - ggf. vereinfacht ausgeführte - Zahnwurzel (14) aufweisen.

5. Verfahren gemäß einem der vorherigen Ansprüche, wobei besagte Zahnkonfiguration die Konfiguration im Unter- oder Oberkiefer eines Patienten, oder in einem Abschnitt desselben, reproduziert.

6. Verfahren gemäß einem der vorherigen Ansprüche, wobei das Modell des Kieferbogens (52) Kavitäten (12) aufweist, die vor Beginn des Simulationsschritts c) in Bezug auf Ihre Position und Ausrichtung in etwa dem Istzustand von Zahnfächern, z.B. Sockets, der zu platzierenden Zahnmodelle (19, 51) entsprechen.

7. Verfahren gemäß Anspruch 6, wobei das Modell eines Kieferbogens (52, 25) mit besagten Kavitäten hergestellt wird durch
a) Anfertigen eines 3D-Scans eines Ausgusses, welcher Ausguss anhand einer Abformung des Ober- oder Unterkiefers eines Patienten mit einem geeignetem Material erhalten wird,
b) Anfertigen eines CAD-Modells des Ist-Zustands des Ober- oder Unterkiefers des Patienten, oder eines Abschnitts desselben, und
c) virtuelles Entfernen der in dem CAD-Modell des Ist-Zustands repräsentierten Zähne nebst den dazugehörigen ggf. vereinfacht ausgeführten Zahnwurzeln, wobei in dem so erhaltenen Kieferbogen-CAD-Modell den entfernten Zahnwurzeln entsprechende Kavitäten generiert werden, und
d) Herstellen eines physischen Kieferbogen-Modells mit den betreffenden Kavitäten auf Basis des besagten Kieferbogen-CAD-Modells mittels einer CAM-Technik.

8. Verfahren gemäß einem der vorherigen Ansprüche, wobei
a) mittels bildgebendem Verfahren ein CAD-Modell mindestens einer Zahnwurzel erzeugt wird, und
b) besagtes CAD-Modell der mindestens einen Zahnwurzel dem Kieferbogen-CAD-Modell hinzugefügt wird.

9. Verfahren gemäß Anspruch 6, wobei das Modell eines Kieferbogens (52, 25) mit besagten Kavitäten (12) hergestellt wird durch
a) Anfertigen eines 3D-Scans eines Ausgusses, welcher Ausguss anhand einer Abformung des Ober- oder Unterkiefers eines Patienten mit einem geeignetem Material erhalten wird,
b) Anfertigen eines CAD-Modells des Ist-Zustands des Ober- oder Unterkiefers des Patienten, oder eines Abschnitts desselben, und
c) virtuelles Isolieren mindestens zweier in dem CAD-Modell des Ist-Zustands repräsentierten Zähne (15) nebst den dazugehörigen ggf. vereinfacht ausgeführten Zahnwurzeln (14), und überführen derselben in ein Zahnkranz-CAD-Modell,
d) Herstellen eines physischen Modells eines Zahnkranzes aufweisend die in Schritt c) virtuell isolierten Zähne (15) basierend auf dem Zahnkranz-CAD-Modell mittels einer CAM-Technik,
e) Platzieren des physischen Modells des Zahnkranzes in dem Einbettungsmaterial (20) dergestalt, dass letzteres Kavitäten (12) ausbildet, die den ggf. vereinfacht ausgeführten Zahnwurzeln entsprechen, und
f) Entfernen mindestens eines Teils des besagten physischen Modells des Zahnkranzes unter Zurücklassung der besagten Kavitäten (12).

10. Verfahren nach Anspruch 7, wobei sich an den Schritt des virtuellen Entfernens der in dem virtuellen CAD-Modell des Istzustands repräsentierten Zähne ein Schritt der Generierung,
Überarbeitung und Speicherung mindestens eines Zahn-CAD-Modells (15) eines so entfernten Zahns nebst der dazugehörigen ggf. vereinfacht ausgeführten Zahnwurzel anschließt.

11. Verfahren gemäß Anspruch 10, ferner aufweisend den Schritt der Herstellung mindestens eines der physischen Zahnmodelle (19, 51) nebst - ggf. vereinfacht ausgeführter - Zahnwurzel auf Basis des besagten Zahn-CAD-Modells mittels einer CAM-Technik.

12. Verfahren gemäß einem der vorherigen Ansprüche, wobei sich an den Schritt der Erniedrigung der Viskosität des Einbettungsmaterials zur Simulieren einer kieferorthopädischen Korrekturbewegung ein Schritt der Erhöhung der Viskosität des Einbettungsmediums anschließt, um den Simulationsprozess zu stoppen.

13. Verfahren gemäß einem der vorherigen Ansprüche, wobei die Aufnahme der Übergangsstadien der simulierten kieferorthopädischen Korrekturbewegung mit Hilfe eines bildgebenden Verfahrens ausgewählt aus der Gruppe
a) Stereofotografie bzw. 3D-Fotografie
b) Stereovideografie bzw. 3D-Videografie
c) 3D-Realtime-Scanning
d) 3D-Tracking
e) berührende 3D-Vermessungsverfahren
f) Lichtfeld-Fotografie
erfolgt.

14. Verfahren gemäß einem der vorherigen Ansprüche, wobei sich an die Aufnahme eines Übergangsstadiums mindestens einer der folgenden Schritte anschließt:
a) Fotogrammetrische Identifikation von mindestens zwei geometrischen Koordinaten der Position eines Zahns (51, 19) in besagtem Übergangsstadium,
b) Zuordnung besagter geometrischen Koordinaten zu eingangs gewonnenen entsprechenden Koordinaten desselben Zahns im Ist-Zustand,
c) Simulation bzw. Nachvollziehen der Korrekturbewegung des besagten Zahns,
d) Erstellung eines digitalen Datensatzes des besagten Übergangsstadiums, und
e) Herstellung mindestens eines kieferorthopädischen Setups (10) eines Übergangsstadiums, wobei besagtes Setup mittelbar oder unmittelbar auf einem Modell basiert, das auf Basis der dergestalt gewonnenen digitalen Daten mittels einer CAM-Technik hergestellt wurde.

## Claims

1. Method for production of at least one orthodontic set-up (10), comprising
a) placing dental models (19, 51) in a model of a jawbone (52, 25) or a segment thereof comprising an embedding material (20) in such a way that the actual state of a dental configuration of a patient is repoduced in order to obtain a model of the dental configuration (e.g., "typodont"),
b) attaching at least one tie (53) directly or indirectly to at least two dental models (51) in such a way that a pull or push is exerted onto the dental models (51), or attaching at least one tie (18) to at least one dental model (19) in such a way that a pull or push is exerted onto the dental model (19),
c) simulating an orthodontic correction movement in the model of the dental configuration due to the pull or push exerted by
(i) reducing the viscosity of the embedding material (20) or dividing the same
(ii) at least partially removing the emdedding material,
d) recording at least two transition states (e.g., "frames") of the simulated orthodontic correction movement in the model of the dental configuration by use of an imaging procedure or a tracking procedure,
e) generating digital data which directly or indirectly describe the positions of at least one dental model (19, 51) in the model of dental configuration with regard to at least two recorded transition states, and
f) producing at least one orthodontic set-up of a transition state, wherein said set-up is based directly or indirectly on a model that was generated on basis of digital data thus obtained by use of a CAM technology.

2. Method according to claim 1, wherein said embedding material (20) comprises at least partially a rheologic material.

3. Method according to any of the preceeding claims, wherein said embedding material (20) comprises at least partially a thermoplastic material.

4. Method according to any of the preceeding claims, wherein the dental models comprise necks of teeth and - potentially simplified - roots of teeth (14) in addition to tooth crowns (13).

5. Method according to any of the preceeding claims, wherein said dental configuration is reproducing the configuration in the lower and upper jaw of a patient, or in a segment thereof.

6. Method according to any of the preceeding claims, wherein the model of the jawbone (52) comprises cavities (12) which correspond prior to the begin of simulation step c) in terms of their position and orientation roughly to the actual state of alveoles (e.g., sockets) of the dental models to be placed (19, 51) therein.

7. Method according to claim 6, wherein the model of a jawbone (52, 25) with said cavities is produced by the following steps:
a) Generating a 3D scan of a cast, which cast has been obtained by casting an upper and lower jaw of a patient with a suitable material,
b) yielding a CAD model of the actual state of the upper or lower jaw of a patient, or a segment thereof, and
c) virtually removing the teeth represented in the CAD model of the actual state together with respective - potentially simplified - roots of teeth, wherein cavities are generated corresponding to the removed roots of teeth in the jawbone CAD model thus obtained, and
d) generating a physical jawbone model comprising respective cavities on basis of said jawbone CAD model using a CAM technology.

8. Method according to any of the preceeding claims, wherein
a) a CAD model of at least one root of tooth is generated using an imaging procedure, and
b) said CAD model of the at least one root of tooth is added to the jawbone CAD model.

9. Method according to claim 6, wherein the model of a jawbone (52, 25) with said cavities (12) is produced by the following steps:
a) Generating a 3D scan of a cast, which cast has been obtained by casting the upper or lower jaw of a patient with a suitable material,
b) yielding a CAD model of the actual state of the upper or lower jaw of a patient, or a segment thereof, and
c) virtually isolating at least two teeth (15) represented in the CAD model of the actual state together with respective - potentially simplified - roots of teeth (14), and transferring of the same into a teeth rim CAD model,
d) generating a physical model of a teeth rim comprising the teeth (15) virtually isolated in step c) based on the teeth rim CAD model using a CAM technology,
e) placing the physical model of the teeth rim into the embedding material (20) in such a way that the latter forms cavities (12) corresponding to the - potentially simplified - roots of teeth, and
f) removing at least a part of said physical model of the teeth rim leaving behind said cavities (12).

10. Method according to claim 7, wherein subsequently to the step of virtually removing the teeth represented in the virtual CAD model of the actual state, a step of generating, revising and storing at least one tooth CAD model (15) of a removed tooth in addition to the respective - potentially simplified - root of tooth is added.

11. Method according to claim 10, further comprising the step of producing at least one of the physical dental models (19, 51) in addition to the respective - potentially simplified - root of tooth on basis of said tooth CAD model using a CAM technology.

12. Method according to any of the preceeding claims, wherein subsequently to the step of reducing the viscosity of the embedding material for simulation of an orthodontic correction movement, a step of increasing the viscosity of the embedding material is added in order to stop the simulation process.

13. Method according to any of the preceeding claims, wherein the recording of the transition states of the simulated orthodontic correction movements is perfomed by use of an imaging procedure selected from the group consisting of
a) stereo photography or 3-D photography
b) stereo videography or 3-D videography
c) 3-D real-time scanning
d) 3-D tracking
e) contact 3-D scanning procedure
f) light field photography.

14. Method according to any of the preceeding claims, wherein subsequently to the recording of the transition state, at least one of the following steps is added:
a) photogrammetric identification of at least two geometric coordinates of the position of a tooth (51, 19) in said transition state,
b) alignment of said geometric coordinates to initially obtained respective coordinates of the same tooth in the actual state,
c) simulation or reconstruction of the correction movement of said tooth,
d) generating a digital data set of said transition state, and
e) producing at least one orthodontic set-up (10) of a transition state, wherein said set-up is directly or indirectly derived from a model that has been generated on basis of thus obtained digital data using a CAM technology.

## Revendications

1. Procédé de fabrication d'au moins un setup orthodontique (10), présentant :
a) le placement de modèles de dents (19, 51) dans un modèle d'un arc mandibulaire (52, 25) ou d'un tronçon de celui-ci présentant un matériau d'empreinte (20) de telle sorte que l'état réel d'une configuration dentaire d'un patient est reproduite pour obtenir un modèle de la configuration dentaire, par exemple un typodont,
b) application d'au moins un élément de traction (53) directement ou indirectement sur au moins deux modèles de dents (51) de telle sorte qu'une traction ou une pression soit exercée sur les modèles de dents (51), ou
application d'au moins un élément de traction (18) sur au moins un modèle de dents (19) de telle sorte qu'une traction ou une pression soit exercée sur les modèles de dents (19),
c) simulation d'un mouvement de correction orthodontique dans le modèle de la configuration dentaire en raison de la traction ou de la pression exercée par
(i) la baisse de la viscosité du matériau d'empreinte (20) ou de parties de celui-ci
(ii) l'enlèvement au moins partiel du matériau d'empreinte
d) prise de vue d'au moins deux stades de transition, par exemple frames, du mouvement de correction orthodontique simulé dans le modèle de la configuration dentaire à l'aide d'un procédé de formation d'images ou d'un procédé de tracking,
e) extraction de données numériques, qui décrivent directement ou indirectement les positions d'au moins un modèle dentaire (19, 51) dans le modèle de la configuration dentaire par rapport à au moins deux stades de transition enregistrés, et
f) production d'au moins un setup orthodontique d'un stade de transition, dans lequel ledit setup est basé directement ou un indirectement sur un modèle qui a été créé sur la base des données numériques ainsi extraites au moyen d'une technique de FAO.

2. Procédé selon l'une des revendications précédentes, dans lequel le matériau d'empreinte (20) présente un matériau rhéologique au moins par tronçons.

3. Procédé selon l'une des revendications précédentes, dans lequel le matériau d'empreinte (20) présente un matériau thermoplastique au moins par tronçons.

4. Procédé selon l'une des revendications précédentes, dans lequel les modèles dentaires présentent, outre une couronne dentaire (13), un collet dentaire ainsi qu'une racine dentaire (14) conçue le cas échéant de façon simplifiée.

5. Procédé selon l'une des revendications précédentes, dans lequel ladite configuration dentaire reproduit la configuration dans la mâchoire inférieure ou supérieure d'un patient, ou dans un tronçon de celle-ci.

6. Procédé selon l'une des revendications précédentes, dans lequel le modèle de l'arc mandibulaire (52) présente des cavités (12) qui correspondent, avant le début de l'étape de simulation c) par rapport à leur position et leur alignement, environ à l'état réel d'alvéoles dentaires, par exemple de sockets, des modèles dentaires (19, 51) à placer.

7. Procédé selon la revendication 6, dans lequel le modèle d'un arc mandibulaire (52, 25) est fabriqué avec lesdites cavités par
a) réalisation d'un scan 3D d'un remplissage, lequel remplissage est obtenu à l'aide d'un moulage de la mâchoire supérieure ou inférieure d'un patient avec un matériau approprié,
b) réalisation d'un modèle de CAO de l'état réel de la mâchoire supérieure ou inférieure du patient, ou d'un tronçon de celle-ci, et
c) enlèvement virtuel des dents représentées dans le modèle de CAO de l'état réel avec les racines dentaires correspondantes, réalisées le cas échéant de façon simplifiée, dans lequel dans le modèle de CAO d'arc mandibulaire ainsi obtenu, des cavités correspondant aux racines dentaires enlevées sont générées, et
d) fabrication d'un modèle d'arc mandibulaire physique avec les cavités correspondantes sur la base dudit modèle de CAO d'arc mandibulaire au moyen d'une technique de FAO.

8. Procédé selon l'une des revendications précédentes, dans lequel
a) un modèle de CAO d'au moins une racine dentaire est produit au moyen de procédé de formation d'image, et
b) ledit modèle de CAO de l'au moins une racine dentaire est ajouté au modèle de CAO d'arc mandibulaire.

9. Procédé selon la revendication 6, dans lequel le modèle d'un arc mandibulaire (52, 25) est fabriqué avec lesdites cavités (12) par
a) réalisation d'un scan 3D d'un remplissage, lequel remplissage est obtenu à l'aide d'un moulage de la mâchoire supérieure ou inférieure d'un patient avec un matériau approprié,
b) réalisation d'un modèle de CAO de l'état réel de la mâchoire supérieure ou inférieure du patient, ou d'un tronçon de celle-ci, et
c) isolement virtuel d'au moins deux dents (15) représentées dans le modèle de CAO de l'état réel avec les racines dentaires (14) correspondantes, réalisées le cas échéant de façon simplifiée, et passage de celles-ci dans un modèle de CAO de couronne dentaire,
d) fabrication d'un modèle physique d'une couronne dentaire présentant les dents (15) isolées virtuellement à l'étape c) sur la base du modèle de CAO de couronne dentaire au moyen d'une technique de FAO,
e) placement du modèle physique de la couronne dentaire dans le matériau d'empreinte (20) de telle sorte que ce dernier forme des cavités (12) qui correspondent aux racines dentaires réalisées le cas échéant de façon simplifiée, et
f) enlèvement d'au moins une partie dudit modèle physique de la couronne dentaire par abandon desdites cavités (12).

10. Procédé selon la revendication 7, dans lequel une étape de génération, traitement et stockage d'au moins un modèle de CAO de dent (15) d'une dent ainsi enlevée avec la racine dentaire correspondante, réalisée le cas échéant de façon simplifiée, suit l'étape de l'enlèvement virtuel des dents représentées dans le modèle de CAO virtuel de l'état réel.

11. Procédé selon la revendication 10, présentant en outre l'étape de fabrication d'au moins un des modèles de dents physiques (19, 51) avec la racine dentaire - réalisée le cas échéant de façon simplifiée - sur la base dudit modèle de CAO de dent au moyen d'une technique de FAO.

12. Procédé selon l'une des revendications précédentes, dans lequel une étape d'augmentation de la viscosité du fluide d'empreinte pour arrêter le processus de simulation suit l'étape de baisse de la viscosité du matériau d'empreinte pour simuler un mouvement de correction orthodontique.

13. Procédé selon l'une des revendications précédentes, dans lequel la prise de vue des stades de transition du mouvement de correction orthodontique simulé est effectuée à l'aide d'un procédé de formation d'images sélectionné parmi le groupe suivant :
a) stéréophotographie, respectivement photographie 3D,
b) stéréovidéographie, respectivement vidéographie 3D,
c) numérisation 3D en temps réel,
d) tracking 3D,
e) procédé de mesure 3D par contact,
f) photographie du champ lumineux.

14. Procédé selon l'une des revendications précédentes, dans lequel au moins une des étapes suivantes suit la prise de vue d'un stade de transition :
a) identification photogrammétrique d'au moins deux coordonnées géométriques de la position d'une dent (51, 19) dans ledit stade de transition,
b) attribution desdites coordonnées géométriques aux coordonnées correspondantes extraites au départ de la même dent à l'état réel,
c) simulation, respectivement exécution du mouvement de correction de ladite dent,
d) création d'un jeu de données numériques dudit stade de transition, et
e) fabrication d'au moins un setup orthodontique (10) d'un stade de transition, dans lequel ledit setup est basé directement ou indirectement sur un modèle qui a été produit sur la base des données numériques extraites ainsi au moyen d'une technique de FAO.
